# EUROPEAN PATENT APPLICATION

(11) **EP 4 286 220 A1**
(43) Date of publication of application: **06.12.2023**
(21) Application number: 22176432.7
(22) Date of filing: 31.05.2022
(51) Int. Cl.: B60Q 1/26, B60Q 1/30, B60Q 11/00

(54) **TAIL LIGHT UNIT, VEHICLE COMPRISING SUCH A TAIL LIGHT UNIT, AND METHOD FOR OPERATING THE TAIL LIGHT UNIT**

(71) Applicant: KNORR-BREMSE Systeme für Nutzfahrzeuge GmbH, 80809 München (DE)
(72) Inventor: BATAI, Andras, 7623 Pecs (HU); SZÖLLOSI, Adam, 1119 Budapest (HU); THUM, Daniel, 81927 München (DE); NEMETH, Huba, 1116 Budapest (HU); KOMLOS, Tamas, 6448 Csavoly (HU); SZOKOL, Tamas, 1112 Budapest (HU); MERZA, Valér, 2000 Szentendre (HU); ZÖLDHEGYI, Valter, 2049 Diósd (HU); Dudas, Zsolt, 6728 Szeged (HU)

(57) **Abstract**

A tail light unit (2) of a vehicle (1) is provided. The tail light unit (2) comprises at least one RGB LED light source (3) configured to be capable to emit light having different colors depending on a trigger signal for the at least one RGB LED light source (3), wherein the RGB LED light source (3) is configured to emit light of a specific color depending on a specific trigger signal.

## Description

The invention relates to a tail light unit, a vehicle comprising such a tail light unit, and a method for operating the tail light unit, in particular, for a tail light unit of a vehicle.

Prescribed by law, different kinds of lights are provided at a rear of a vehicle or trailer. These kinds of lights are a brake light, a taillight, and a turn indicator lamp which is to be respectively attached to the right and to the left of the rear side of the vehicle. Furthermore, additional lamps are usually attached to the rear of the vehicle. These lights can be a reverse light and a fog light. Moreover, end-outline markers can be provided on rear corners of a trailer and side markers can be provided on the sides of the trailer.

If such a light fails, this light is immediately to be repaired in order to be able to continuously use the vehicle in a safe manner; however, such a repair can lead to a downtime of the vehicle.

In order to avoid such a downtime of the vehicle, redundant lights can be provided which can substitute faulty lights in order to continuously operate the vehicle. However, the provision of redundant lights incurs additional costs since more lamps are needed to be fitted to the rear of the vehicle.

Therefore, the object underlying the invention is to remedy the above disadvantages and to provide a tail light unit which enables an operation of the vehicle without downtime while reducing costs since no respective additional redundant lights are required or the repair can be conducted during a routine inspection so that no additional downtime has to be accepted.

The object is achieved by a tail light unit according to claim 1, a vehicle according to claim 6 and a method according to claim 7. Advantageous further developments are included in the dependent claims.

According to an aspect of the invention, a tail light unit attachable to a rear side of a vehicle comprises at least one RGB LED light source configured to be capable to emit light having different colors depending on a trigger signal for the at least one RGB LED light source, wherein the RGB LED light source is configured to emit light of a specific color depending on a specific trigger signal.

The RGB LED light source is structured such that it comprises an LED housing and three LEDs in the LED housing. The three LEDs respectively emit light having different colors. The R stands for red color, the G for green color, and the B for blue color. In an additive color system, any color tone can be mixed of RGB LEDs, and even white can be generated by combining all three colors. Therefore, the RGB LED light source emits light having different colors depending on the trigger signal which enables the use of the RGB LED light source for different kinds of lights. Hence, the RGB LED light source can alternatively fulfil different lighting functions on the rear side of the vehicle.

In an advantageous implementation of the tail light unit, the at least one RGB LED light source is configured such that the light emitted by the at least one RGB LED light source has an adjustable intensity depending on the trigger signal.

By this characteristic, a light source can be fulfill the lighting function regardless of the color and the intensity of the emitted light such that a flexibility for substituting by the RGB LED light source is improved.

In a further advantageous implementation of the tail light unit, the at least one RGB LED light source is configured to emit light having the specific color selected from a group of white color, red color, and amber color.

When the RGB LED light source can be controlled by the trigger signal in a way such that either white color, red color, or amber color is emitted, the different colors of the light emitted by the light sources provided on the rear of the vehicle can be easily provided by one single RGB LED light source.

Due to a further advantageous implementation of the tail light unit, the tail light unit comprises at least two RGB LED light sources, and the RGB LED light sources are configured to fulfil at least two of a group of lighting functions of a turn indicator light, a taillight, a brake light, a fog light, a reverse light, and an outline marker lamp.

By such a tail light unit, if a RGB light source of another group of lighting functions fails, the RGB LED light sources can substitute the failed RGB LED light source of the other group of lighting functions, namely, of the turn indicator light, the taillight, the brake light, the fog light, and the reverse light usually included in the tail light unit at a rear side of the vehicle, and the outline marker lamp.

In another advantageous implementation of the tail light unit, the tail light unit comprises at least two RGB LED light sources, and the at least two of the several RGB LED light sources are configured to be supplied by independent power supply units of a power supply system and, in particular, configured such that they are controlled by independent trigger signals.

Such a tail light unit increases safety since not only a failure of a RGB LED light source itself but also the failure of the supply and, in particular, of the control of the RGB LED light source can be remedied by operating another RGB LED light source.

According to another aspect of the invention, a vehicle comprises a tail light unit of the above implementations and a controller configured to provide the trigger signal for the at least one RGB LED light source.

Such a vehicle has an improved safety standard since, if anyone of the light sources fails, another light source can substitute the function of the failed light source.

According to a further aspect of the invention, a method for operating a tail light unit according to the invention comprises the step: operating the at least one RGB LED light source by controlling the at least one RGB LED light source by means of a specific trigger signal from a controller, wherein the controller provides a specific trigger signal being assigned to a specific color of the different colors of the light emitted by the RGB LED light source.

Such a method enables that the RGB LED light source can fulfil different lighting functions on the rear side of the vehicle.

In an advantageous implementation of the method, a predefined intensity of the emitted light is controlled by the specific trigger signal.

By this implementation, not only a RGB LED light source emitting a light having an arbitrary color but the same intensity can be substituted but a RGB LED light source emitting any kind of the light having the arbitrary color and an arbitrary intensity can be substituted such that a flexibility for substituting the RGB LED light sources is improved.

By an advantages implementation of the method, a predefined temporal pattern is controlled by the specific trigger signal.

By controlling the predefined temporal pattern, time periods and intervals when the RGB light source emits light can be determined in order to fulfil the lighting function, in particular, of the turn indicator light.

Due to a further advantageous implementation of the method, in particular, for operating a tail light unit having several RGB LED light sources, at least two of the several RGB LED light sources are supplied by independent power supply units of a power supply system and controlled by independent trigger signals.

According to this implementation, not only a failure of a RGB LED light source but also a failure of the supply of RGB LED light source and, in particular, of the trigger signal, particularly a failure of a control line or of the control unit, can be remedied by another RGB LED light source in order to improve safety.

In a further advantageous implementation of the method, in particular, for operating a tail light unit having several RGB LED light sources, the several RGB LED light sources are operated to fulfil at least two of a group of lighting functions of a turn indicator light, a taillight, a brake light, a fog light, a reverse light, and an outline marker lamp.

Due to this method, the RGB LED light sources can substitute a failed RGB LED light source of any group of lighting functions of the turn indicator light, the taillight, the brake light, the fog light, the reverse light usually included in the tail light unit at the rear of a vehicle, and the outline marker lamp.

A further advantageous implementation of the method comprises the steps: detecting a malfunction of anyone of the RGB LED light sources controlled to emit light having a specific color and a predefined intensity; and operating another RGB LED light source by means of a trigger signal for emitting light having the specific color and the predefined intensity.

In this implementation, a safe operation of the vehicle is improved since a lighting function of the failed RGB LED light source can immediately be substituted by the function of another RGB LED light source independently from its previous lighting function.

According to a further advantageous implementation of the method, the other RGB LED light source is a RGB LED light source currently not being used.

The failed RGB light source can basically be substituted by an RGB light source currently fulfilling another lighting function, however, without reducing the performance of the other lighting function in an unduly manner. Nevertheless, the use of the RGB light source currently not being used enables the substitution of the failed RGB LED light source without reducing the performance the another lighting function in order to improve safety.

Due to a further advantageous implementation of the method, several, particularly all, of the RGB LED light sources currently not being used in the tail light unit are operated for fulfilling a currently requested lighting function of a turn indicator light, a taillight, a brake light, a fog light, and a reverse light.

By this implementation, the size of the regions of the tail light unit through which the light of the RGB LED light source is emitted can be enlarged in order to improve visibility of the tail light unit and, therefore, of the vehicle.

Subsequently, the invention is elucidated by means of embodiments referring to the attached drawings.

In particular,
- Fig. 1: shows a rear side of a vehicle comprising tail light units according to the invention; and
- Fig. 2: shows an enlarged portion of the rear side of the vehicle provided with two tail light units.

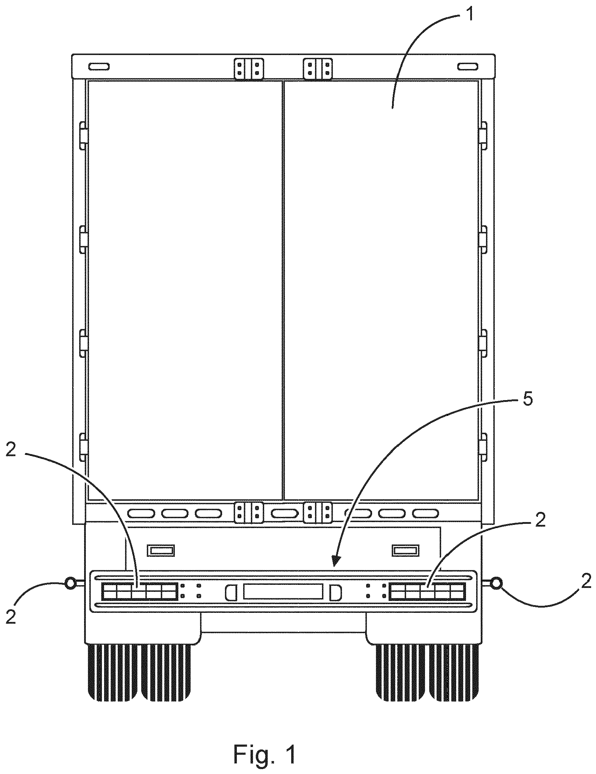

Fig. 1 shows a rear side of a vehicle 1. Two tail light units 2 and two tail light units 2' are attached to the rear side of the vehicle 1, wherein a respective one of the tail light units 2, 2' is attached on the left side and another respective one of the tail light units 2, 2' is attached on the right side of the vehicle 1. Moreover, the vehicle 1 comprises a power supply system 5 for supplying the tail light units 2 with power.

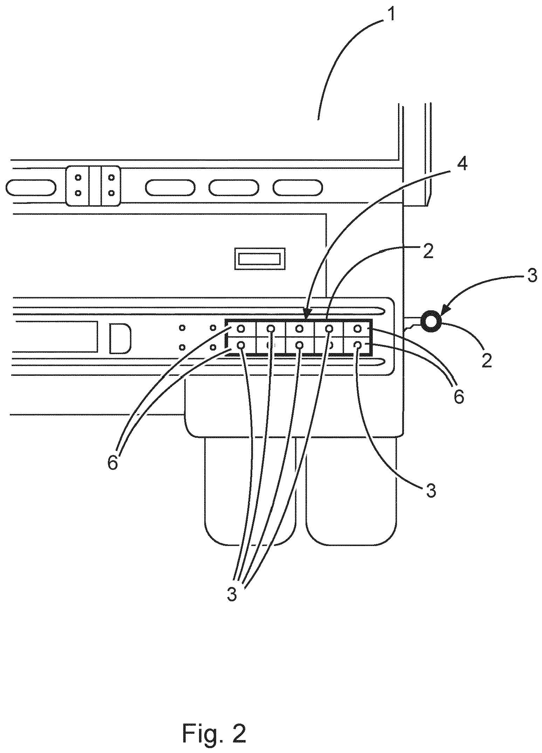

Fig. 2 shows an enlarged portion of the rear side of the vehicle 1 provided with two tail light units 2, 2'.

The tail light unit 2 comprises ten RGB LED light sources 3 which are included in a housing of the tail light unit 2. For the sake of clarity in the drawing, not all of the RGB LED light sources 3 are provided with a reference sign. The other one of the tail light units 2' comprises one RGB LED light source 3 emitting light in a rear direction and indicates the width of the vehicle 1 to following vehicles. In alternative embodiments, the tail light units 2, 2' comprise another number of RGB LED light sources 3, wherein at least one RGB LED light source 3 is included in the housing of one of the tail light units 2, 2'. Moreover, alternatively, another number of tail light units 2 can be provided, wherein, then, several tail light units 2 are arranged on the left side and several tail light units 2 are arranged on the right side of the rear of the vehicle 1.

Moreover, the vehicle 1 comprises a controller 4 in the housing of the tail light unit 2, which controller 4 is configured to provide the trigger signals for the RGB LED light sources 3. The controller 4 is partitioned in several partitions respectively controlling several of the RGB LED light sources 3. In alternative embodiments, the controller 4 is arranged at another location in the vehicle 1 or, as the case may be integrated into another controller of the vehicle 1. Moreover, alternatively, one of the partitions of the controller controls only one RGB LED light source 3 or the controller 4 is not partitioned.

The controller, or, in alternative embodiments, a comparable control unit, EPROM, or the like, is configured such that it can generate trigger signals for several, in particular predefined, light pattern, time intervals (e.g. a turn indicator light), intensities, etc.

Each RGB LED light source 3 is structured such that it comprises an LED housing and three LEDs in the LED housing. The three LEDs respectively emit light having different colors, in particular, the three LEDs respectively emit Red light, Green light and Blue light. The RGB LED light source 3 has one single input interface for different trigger signals.

The RGB light source 3 is provided with a lens emitting the light emitted by the RGB light source 3 through a light emitting area of the lens. The RGB light source 3 and the lens form a so-called light block 6, which, in turn, form a light emitting area of the tail light unit 2 having sufficient dimensions for enabling a requested visibility of the light of the RGB LED light source 3. Also, for the sake of clarity in the drawing, not all of the light blocks 6 are provided with a reference sign. In an alternative embodiment, instead of being provided with the lens, the RGB LED light source is provided with a fiber optics.

The RGB LED light sources 3 are respectively configured to be capable to emit light having different colors depending on the trigger signal for the RGB LED light source 3.

In particular, the RGB LED light sources 3 emit light having the different specific colors selected from a group of white color, red color, and amber color. Furthermore, the RGB LED light sources 3 are configured such that their emitted light has a varying intensity depending on the trigger signal. Therefore, the RGB LED light sources 3 have freely associated lighting functions.

In alternative embodiments, the RGB light sources 3 are configured or controlled such that they also emit light having another color, for example, a blue color. In further alternative embodiments, the RGB LED light sources 3 are configured or controlled such that they emit light having a fixed intensity.

The RGB LED light sources 3 fulfil the lighting functions of a turn indicator light, a taillight, a brake light, a fog light, a reverse light, and an outline marker lamp. For the turn indicator light, the RGB LED light source 3 emits light having an amber color and a high light intensity, for the taillight, the RGB LED light source 3 emits light having a red color and a low light intensity, for the brake light, the RGB LED light source 3 emits light having a red color and a high light intensity, for the fog light, the RGB LED light source 3 emits light having a red color and a high light intensity, and for the reverse light, the RGB LED light source 3 emits light having a white color and a high light intensity. Moreover, for the outline marker lamp, in the rear direction, one RGB LED light source 3 emits light having a red color and a low intensity and, in the front direction, another RGB LED light source 3 emits light having a white color and a low light intensity. The light source emitting the light in the front direction is not mandatorily formed by an RGB LED light source 3. Moreover, in alternative embodiments, some of the lighting functions are fulfilled by LED light sources not being an RGB LED light source 3 or by conventional bulbs. In further alternative embodiments, the RGB LED light sources 3 fulfil at least two of a group of the above-mentioned lighting functions.

As shown in Fig. 2, the RGB LED light sources 3 are arranged in the tail light unit 2 in a pattern consisting of two lines and 5 rows. Further, the RGB LED light sources 3 intended for fulfilling the same lighting function are respectively arranged one above the other. Therefore, respectively two RGB LED light sources 3 arranged one above the other function either as the turn indicator light, the taillight, the brake light, the fog light, or the reverse light. The two RGB LED light sources 3 fulfilling the same lighting function are supplied by independent power supply units of the power supply system 5 and they are controlled by independent trigger signals. The independent power supply units are formed by individual cables for supplying the RGB LED light sources 3. The independent trigger signals are provided by different partitions of the controller 4 respectively controlling a specific one or, alternatively, a group of the RGB LED light sources 3. Hence, the two RGB LED light sources 3 fulfilling the same lighting function form a redundant pair. In alternative embodiments, the RGB light sources 3 can be arranged in another manner, for example, the two RGB LED light sources 3 fulfilling the same lighting function are arranged side-by-side. Moreover, in alternative embodiments, not all of the lighting functions are performed by two RGB LED light sources 3 but with only one single RGB LED light source 3 or more than two RGB LED light sources 3 and/or not all of the RGB LED light sources 3 fulfilling the same lighting functions are supplied by independent power supply units of the power supply system 5 and/or controlled by independent trigger signals from the controller 4.

One or, alternatively, another number of the RGB LED light sources 3 for emitting red light in the rear direction and one or, alternatively, another number of the light sources for emitting white light in the front direction are provided in the tail light unit 2' for fulfilling the lighting function of the outline marker lamp.

In use, the RGB LED light sources 3 are operated by controlling the RGB LED light sources 3 by means of a specific trigger signal from the controller 4, which specific trigger signal is assigned to a specific color of the different colors of light emitted by the RGB LED light source 3. Moreover, the specific intensity of the light emitted by the RGB LED light sources 3 is also controlled by a specific trigger signal. The specific color and the predefined intensity of the light respectively emitted by the RGB LED light sources 3 depend on one another such as to fulfill the respective lighting functions being the turn indicator light, the taillight, the brake light, the fog light, and the reverse light.

For improving safety, at least two of the several RGB LED light sources 3 are supplied by the independent power supply units of the power supply system 5 and controlled by the independent trigger signals from the controller 4. Therefore, if one power supply unit of the power supply system 5 or a trigger signal for one of the RGB LED light sources 3 fulfilling a specific lighting function fails, another RGB LED light source 3 supplied by another power supply unit of the power supply system 5 and controlled by another trigger signal can substitute the failed RGB LED light source 3 as described in the following.

The several RGB LED light sources 3 are operated to fulfil at least two of the group of lighting functions of the turn indicator light, the taillight, the brake light, the fog light, the reverse light, and the outline marker lamp. In particular, the RGB LED light source 3 in the housing of the tail light unit 2' usually fulfilling the lighting function of the outline marker lamp, can, for example, also function as the turn indicator light.

In particular, if a malfunction of one of the RGB LED light sources 3 controlled to emit light having a specific color and a predefined intensity is detected, another RGB LED light source 3 is operated by means of a trigger signal transmitted by the controller 4 for emitting light having the specific color and the predefined intensity. The malfunction is detected by monitoring the current of the RGB LED light sources 3 by means of the controller 4. The other RGB LED light source 3 is a light source currently not being used. In alternative embodiments, the other RGB LED light source 3 can be in use, however, fulfilling a lighting function with a subordinated priority.

In a specific embodiment, several, particularly all, of the RGB LED light sources 3 currently not being used are operated for fulfilling a currently requested lighting function of a turn indicator light, a taillight, a brake light, a fog light, and a reverse light. Thereby, the area of the tail light units 2 for the individual lighting function can be enlarged to improve visibility of the lighting function. Further, alternatively, a completely free control of the RGB light sources is possible so that, depending of the currently requested lighting functions, some or all of the RGB light sources 3 are operated in a spatial or timely pattern in order to fulfil the currently requested lighting functions.

While the invention has been illustrated and described in detail in the drawings and the foregoing description, such illustration and description are to be considered illustrative or exemplary and not restrictive. The invention defined in the claims is not limited to the disclosed embodiments. From reading the present disclosure, other modifications will be apparent to a person skilled in the art. Such modifications may involve other features, which are already known in the art and may be used instead of or in addition to features already described herein. In the claims, the word "comprising" does not exclude other elements or steps, and the indefinite article "a" or "an" does not exclude a plurality.

### LIST OF REFERENCE SIGNS

- 1: vehicle
- 2: tail light unit
- 3: RGB LED light source
- 4: controller
- 5: power supply system
- 6: light block

## Claims

1. A tail light unit (2) of a vehicle (1), wherein
the tail light unit (2) comprises at least one RGB LED light source (3) configured to be capable to emit light having different colors depending on a trigger signal for the at least one RGB LED light source (3), wherein the RGB LED light source (3) is configured to emit light of a specific color depending on a specific trigger signal.

2. The tail light unit (2) of claim 1, wherein
the at least one RGB LED light source (3) is configured such that the light emitted by the at least one RGB LED light source (3) has an adjustable intensity depending on the trigger signal.

3. The tail light unit (2) of claim 1 or 2, wherein
the at least one RGB LED light source (3) is configured to emit the light having the specific color selected from a group of white color, red color, and amber color.

4. The tail light unit (2) of claim 3, wherein
the tail light unit (2) comprises at least two RGB LED light sources (3), and
the RGB LED light sources (3) are configured to fulfil at least two of a group of lighting functions of a turn indicator light, a taillight, a brake light, a fog light, a reverse light, and an outline marker lamp.

5. The tail light unit (2) of anyone of the preceding claims, wherein
the tail light unit (2) comprises at least two RGB LED light sources (3), and
the at least two of the several RGB LED light sources (3) are configured to be supplied by independent power supply units of a power supply system (5) and, in particular, configured such that they are controlled by independent trigger signals.

6. A vehicle (1) comprising a tail light unit (2) according to anyone of the preceding claims and a controller (4) configured to provide the trigger signal for the at least one RGB LED light source (3).

7. A method for operating a tail light unit (2) of a vehicle of anyone of the claims 1 to 5, with the step:
operating the at least one RGB LED light source (3) by controlling the at least one RGB LED light source (3) by means of a specific trigger signal from a controller (4), wherein the controller provides a specific trigger signal being assigned to a specific color of the different colors of the light emitted by the RGB LED light source (3).

8. The method of claim 7, wherein
a predefined intensity of the emitted light is controlled by the specific trigger signal.

9. The method of claim 7 or 8, wherein
a predefined temporal pattern is controlled by the specific trigger signal.

10. The method of anyone of claims 7 to 9, for operating a tail light unit (2) having several RGB LED light sources (3), wherein at least two of the several RGB LED light sources (3) are supplied by independent power supply units of a power supply system (5) and controlled by independent trigger signals.

11. The method of anyone of claims 7 to 10 for operating a tail light unit (2) having several RGB LED light sources (3), wherein the several RGB LED light sources (3) are operated to fulfil at least two of a group of lighting functions of a turn indicator light, a taillight, a brake light, a fog light, a reverse light, and an outline marker lamp.

12. The method of claim 11, comprising the further steps:
detecting a malfunction of anyone of the RGB LED light sources (3) controlled to emit light having a specific color and a predefined intensity; and
operating another RGB LED light source (3) by means of a trigger signal for emitting light having the specific color and the predefined intensity.

13. The method of claim 12, wherein
the other RGB LED light source (3) is a light source currently not being used.

14. The method of anyone of claims 11 or 12, wherein
several of the RGB LED light sources (3) currently not being used are operated for fulfilling a current requested lighting function of a turn indicator light, a taillight, a brake light, a fog light, and a reverse light.

15. The method of anyone of claims 11 or 12, wherein
all of the RGB LED light sources (3) currently not being used are operated for fulfilling a current requested lighting function of a turn indicator light, a taillight, a brake light, a fog light, and a reverse light.
